# EUROPEAN PATENT SPECIFICATION

(11) **EP 1 713 666 B1**
(45) Date of publication and mention of the grant of the patent: **03.09.2008**
(21) Application number: 05704719.3
(22) Date of filing: 18.01.2005
(51) Int. Cl.: B60R 21/34, B60R 19/40, B60R 21/09, B60N 2/427, B62D 1/18

(54) **A SAFETY DEVICE**
SICHERHEITSVORRICHTUNG
DISPOSITIF DE SECURITE

(30) Priority: 09.02.2004 GB 0402803
(43) Date of publication of application: 25.10.2006
(73) Proprietor: AUTOLIV DEVELOPMENT AKTIEBOLAG, 447 83 Vargarda (SE)
(72) Inventor: Thundercliffe, Mark, Swanmore, Hampshire SO32 2NE (GB)
(74) Representative: Parry, Simon James
(86) International application number: PCT/SE2005/000045
(87) International publication number: WO 2005/075262

(56) References cited:
- EP-A1- 1 350 693
- WO-A1-02/072393
- WO-A1-20/04048159
- WO-A1-20/04108486
- WO-A2-20/04007247
- DE-A1- 10 215 137
- JP-A- 2004 203 062

## Description

**THE PRESENT INVENTION** relates to a safety device to move part of a vehicle, and more particularly, in a preferred embodiment, relates to a safety device to be mounted on a vehicle to provide protection for a pedestrian struck by the vehicle in an accident situation.

If a vehicle is involved in a frontal impact with a pedestrian, the head of the pedestrian may impact the top of the vehicle's bonnet or hood. As the pedestrian's head impacts the bonnet the bonnet deforms, and may deform sufficiently to hit the top of the engine block. If, as the bonnet is deformed by the pedestrian, the bonnet hits the engine block, then the pedestrian's head will be rapidly decelerated, potentially causing fatal injury.

In order to minimise injury to a pedestrian involved in an impact with the front of a vehicle, an apparatus may be mounted on the vehicle to raise part of the bonnet to increase the distance between the bonnet and the engine block. An apparatus of this type is disclosed in GB 2382549A, in which a piston and cylinder arrangement is disclosed to raise the rear part of a bonnet in the event of a frontal impact with a pedestrian. This piston and cylinder arrangement enables a bonnet to be lifted very rapidly, to offer protection to the pedestrian. The piston and cylinder arrangement may not be able easily to follow the substantially arcuate movement of the rear part of the bonnet as the bonnet is lifted. Also the piston and cylinder arrangement may not allow the hood to be rapidly returned to its initial lower position after the impact. This may be extremely important, as when the bonnet is in the raised position the visibility of the driver of the vehicle is limited, thus making it difficult for the driver to regain control of the vehicle after the accident, or after an inappropriate raising of the hood, should such an event occur, for example, on striking a small animal or a road-cone.

WO 2004/10848 A1, a document cited under A.54 (3) EPC for this application, discloses a lifting device for raising the bonnet of a car upon impact with a pedestrian, comprising a fixed hollow outer sleeve, a source to supply gas to the exterior of the sleeve, a unit initially mounted within the sleeve, the external diameter of the unit being less than the internal diameter of the sleeve, the unit comprising a plurality of telescoped sleeves, the fixed outer sleeve and the said telescoped sleeves being provided with movement limiters to limit movement of the sleeves, the movement limiters comprising inwardly and outwardly directed lips provided on adjacent sleeves of the device, wherein an extension element is telescopically mounted in the telescoped sleeve of smallest diameter, there being an O-ring between the extension element and said sleeve to provide a substantial gas-tight seal, wherein the device is positioned to move the rear part of a vehicle hood or bonnet wherein the extension element incorporates retaining means to engage and retain a member mounted on part of the hood or bonnet wherein the device differs from the prior art of WO-A-2004/10848 in that the retaining means comprise at least one inwardly directed resilient finger.

Other forms of safety device may be contemplated in which part of a vehicle is moved, such as devices which tilt seats, extend bumpers or retract steering columns.

The present invention seeks to provide an improved safety device.

According to this invention there is provided a safety device to move part of a vehicle.

Conveniently the member is a substantially mushroom shaped retaining member.

Advantageously the extension element has a protecting cover to protect the plurality of telescoped sleeves from oil and dirt.

Preferably each O-ring is shaped and dimensioned to effect a rolling movement as the sleeves move.

Advantageously each O-ring is of a resilient material.

Conveniently the source is a gas generator.

In order that the invention may be more readily understood, and so that further features thereof may be appreciated, the invention will now be described, by way of example, with reference to the accompanying drawings in which:
FIGURE 1 is a sectional view of a safety device in accordance with the preferred embodiment of the present invention, in an initial condition,
FIGURE 2 is a sectional view of the safety device shown in Figure 1, in an intermediate position,
FIGURE 3 is an enlarged view of part of the safety device, as shown in Figure 2,
FIGURE 4 is a sectional view of the safety device shown in Figure 1, in a final position, and
FIGURE 5 is an enlarged view of part of the safety device, as shown in Figure 4.

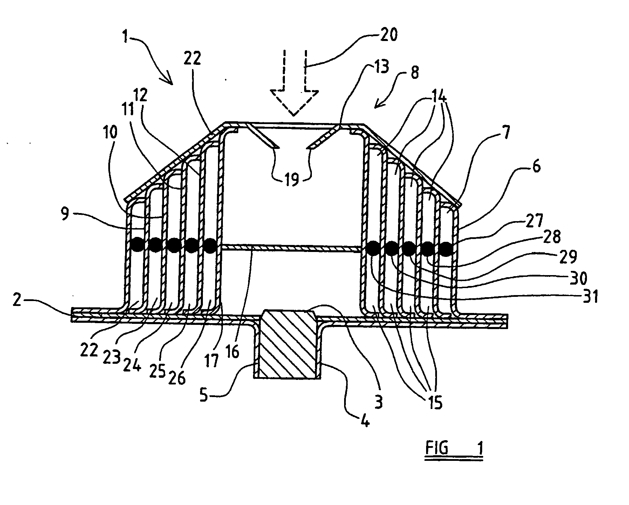

Referring initially to Figure 1, a safety device 1 has a generally planar metal base plate 2 which can be mounted to part of a vehicle body, beneath the rear part of the vehicles hood or bonnet. Other embodiments of the invention may be used to move other parts of a vehicle, such as a vehicle seat or apart of a steering column or to move a bumper.

An aperture 3 extends through the base plate 2. A metal cup shaped housing 4 is attached, or formed integrally with, the lower surface of base plate 2, so that the opening of the housing 4 is aligned with the aperture 3 in base plate 2. The housing 4 accommodates a gas generator 5, which may be a multi-stage gas generator. The gas generator 5 is positioned, upon actuation of the safety device, to supply gas to the region on the upper side of base plate 2. In other embodiments a source of gas such as a bottle of compressed gas may be used.

The lower end of a hollow outer sleeve 6 is fixed to the upper surface of base plate 2, so that the hollow space defined by the outer sleeve 6 is over the aperture 3. The outer sleeve 6, in this preferred embodiment, is of generally cylindrical form, but it may be of another form which is hollow, such as a oval sectioned tube. The outer sleeve 6, in this preferred embodiment, is welded in position on base plate 2, but it may alternatively be formed integrally with base plate 2.

The free end of the outer sleeve 6, at a position above the base plate 2, has a lip 7 which extends inwardly from the terminal end of the outer sleeve 6 towards the centre of the sleeve 6. A unit 8 is received within the hollow space defined by the outer sleeve 6. The external diameter of the unit 8 is less than the internal diameter of the outer sleeve 6 and less than the internal diameter of lip 7.

The unit 8 comprises four inter-nested telescoped sleeves 9-12, which are each of similar shape but of different reducing diameters and an extension element 13. When the safety device 1 is in an initial position, the first telescoped sleeve 9 sits, adjacent the inner surface of the outer sleeve 6, in the space defined by the outer sleeve 6. The other telescoped sleeves 10-12 sit in a concentric arrangement also within the hollow space defined by the outer sleeve 6. Each of the telescoped sleeves 9-12 has an inwardly directed lip 14 at its upper terminal end, and an outwardly directed lip 15 at its lower terminal end. When the safety device 1 is in its initial position the innermost telescoped sleeve 12 accommodates the extension element 13.

The extension element 13 is of hollow cylindrical with a transverse web 16 at its mid point and an outwardly directed lip 17 at its lower terminal end. The upper side of extension element 13 is generally planar with an aperture 18 in its central region. Retaining means are connected to the inside of the upper surface of the extension element 13, beneath the aperture 18. The retaining means are formed of a plurality of inwardly directed resilient fingers 19 which are angled downwardly, towards the web 16. The aperture 18 is arranged to receive a prong 20 (shown in phantom) which is mounted on a vehicle hood. The prong 20 is substantially "mushroom" shaped and able to pass through the aperture 18 in the upper side of extension element 13. As the prong 20 is pushed through the aperture 18 it engages the resilient fingers 19 and deflects the resilient fingers 19 outwardly. Once the end part of the prong 20 has passed the ends of the resilient fingers 19, the ends of the resilient fingers 19 move inwardly, back to their initial position, to hold and retain the end of the prong 20. Thus a connection is established between the extension element 13.

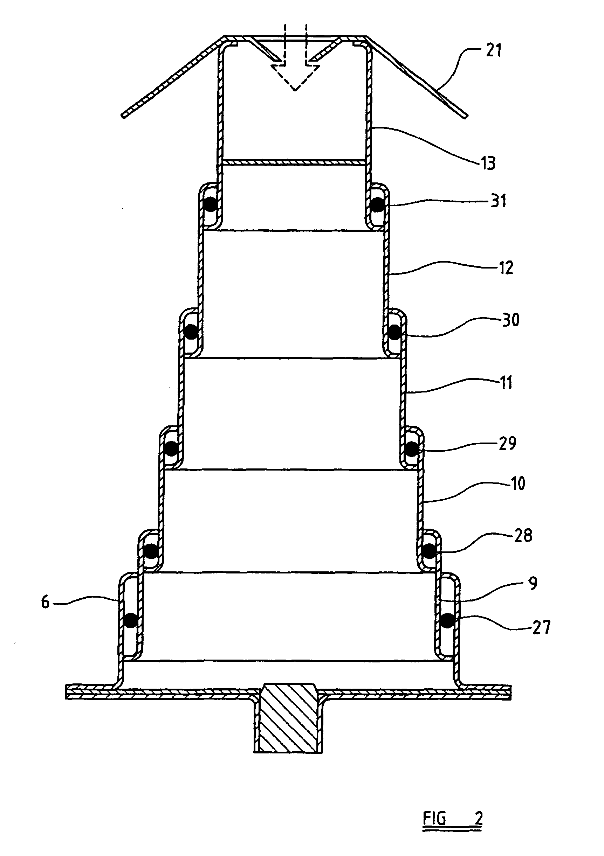

The upper side of the extension element 13 incorporates a protecting cover 21 (seen more clearly in Figure 2) that extends radially outwardly from its upper end. The cover 21 extends over the upper edges of the parts of the unit 8, when it is in its initial position, as shown in Figure 1. The cover 21 helps prevent oil and dirt from entering the unit 8 whilst the safety device 1 is in its initial position, during normal vehicle operation. The cover may also prevent or minimise pressure loss, thus helping to ensure that the sleeves 9-12 and the extension element 13 move in the desired manner.

When the sleeves 9-12 and extension element 13 are nested together the lips 14,15 and 17 define the upper or lower edges of a number of annular chambers 22-26 of reducing diameter. Each of the inter-nested telescoped sleeves 9-12 and also the extension element 13 are provided with a respective O-ring 27-31. The O-rings 27-31 are made of a resilient material such as rubber or plastic. Each O-ring may be of circular cross-section, if cut, or may be of any other convenient cross-section. Each O-ring 27-31 engages an external surface of a telescoped sleeve 9-12 or the extension element 13 and a respective internal surface of an adjacent respective telescoped sleeve 9-12 or the external sleeve 6. The O-rings 27-31 form a substantially gas tight seal around the sleeves and the extension element 13.

In the event that a frontal impact with a pedestrian is detected, the safety device 1 is initiated by actuating the gas generator 5. Once the gas generator 5 has been actuated it injects gas into the space within the outer sleeve 6 below the web 16 of extension element 13. This space is a substantially gas tight volume, due to the O-ring 31 which is fitted around the extension element 13. The gas pressure causes the extension element 13 to move upwardly. The prong 20 is thus engaged and retained by the resilient fingers 19. As more gas is supplied the extension element 13 moves further upwardly. The O-ring 31 is dimensioned to effect a sliding or rolling movement as the extension element 13 moves relative to telescoped sleeve 12. A rolling movement of the O-ring 31 minimises the friction between the extension element 13 and the telescoped sleeve 12, thus allowing the extension element 13 to move upwardly relatively easily.

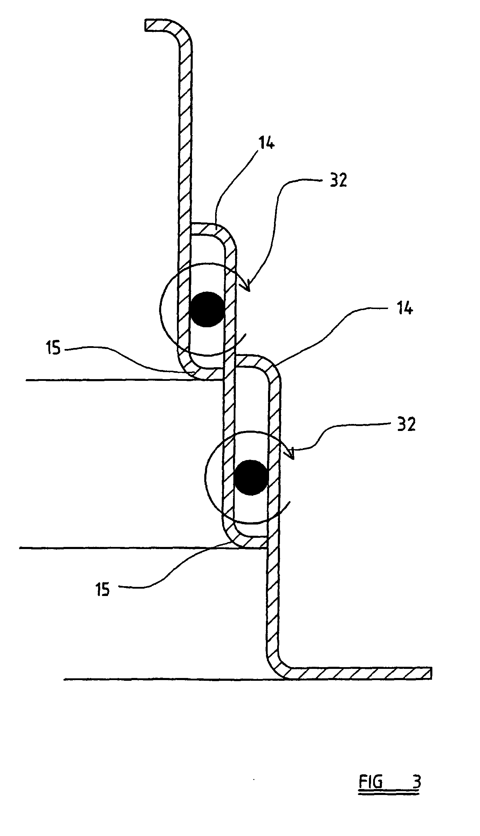

As the extension element 13 moves upwardly the gas generator 5 continues to inject gas into the space within the outer sleeve 6. The upward movement of the extension element 13 tends to cause the sleeves 9-12 to begin to rise. The gas pressure exerts a substantially upward force on the lower lip 15 of telescoped sleeve 12. Therefore, the telescoped sleeve 12 also moves upwardly. The increasing gas pressure causes the other telescoped sleeves 9-11 move upwardly, in succession, with each of the O-rings 27-31 effecting a rolling or sliding movement, as the extension element 13 and the telescoped sleeves 9-12 extend telescopically out from within the outer sleeve 6. The O-rings 27-31 especially if they are of a round cross-section may roll upwardly, in the direction indicated by arrows 32, as shown in Figure 3. The O-rings 27-31 continue to move upwardly as the parts of the unit 8 are fully telescopically extended. When each of the respective O-rings 27-31 contacts the upper lips 7,14 the upward movement of the O-ring 27-31 is restricted.

The telescopic movement ends when each O-ring 27-31 is in contact with an upper lip 7,14 on the outer element associated with the O-rings 27-31 and a lower lip 15 on the inner element.

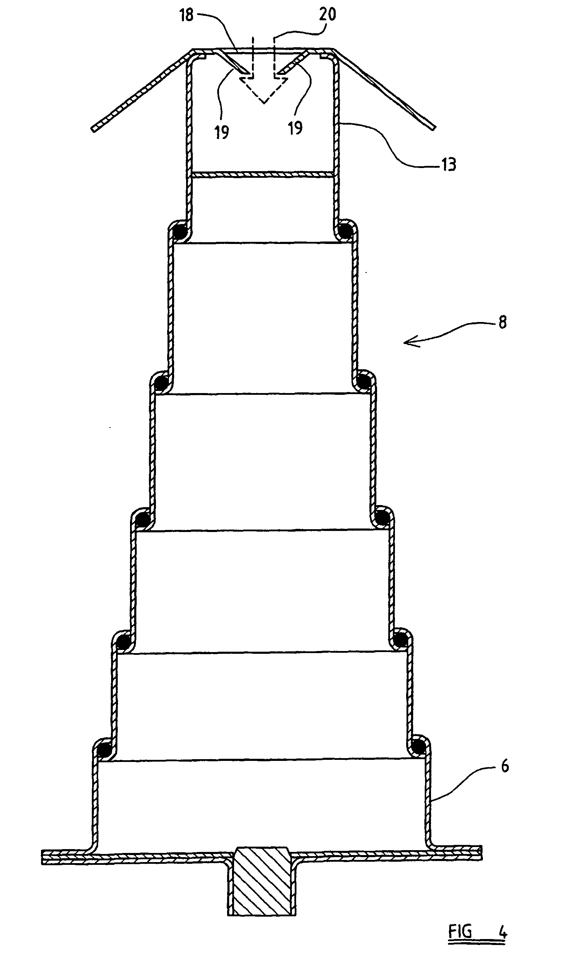

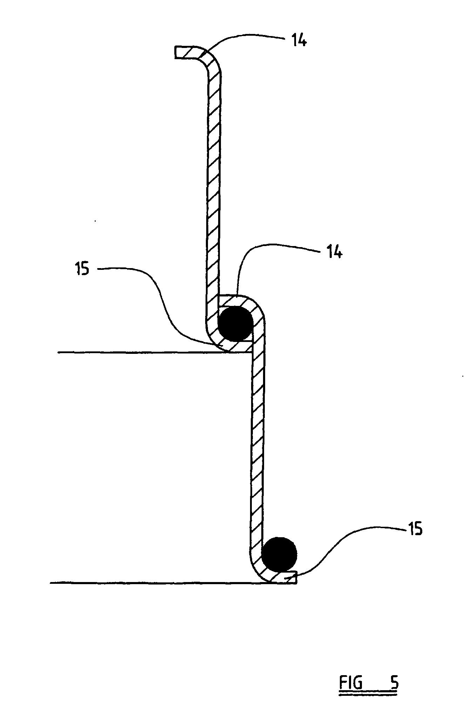

Each upper lip 7,14 forms an element which co-operates with the lower lip 15, through the intermediary of the O-ring 27-31 to prevent further upward movements of parts of the unit 8, and the device 1 is in a final position, as shown in Figure 4. The co-operating elements formed from the upper lips 7,14 and the lower lips 15 prevent further upward movement of the parts of the unit 8, as shown in Figure 5.

As the O-rings 27-31 are made of a resilient material the telescoped sections 9-12 and the extension element 13 are able to extend outwardly from the outer sleeve 6 in a telescopic fashion in which the longitudinal axes of each of the parts of unit 8 are not precisely in line. The parts of the unit 8 may thus tilt relative to each other so that their longitudinal axis are not aligned with the longitudinal axes of the outer sleeve 6. This allows the parts of the unit 8 to effectively lean to one side as they extend out from the outer sleeve 6, whilst still maintaining a substantially gas tight seal within the unit 8. The movement of the unit in this way, during actuation of the safety device 1, allows the prong 20 and hence the rear part of the hood or bonnet to move in a substantially arcuate movement as it is lifted.

After the safety device 1 has lifted the rear part of the hood or bonnet, it can be rapidly returned to its initial position, as shown in Figure 1, so that the drivers view is no longer obstructed by the hood or bonnet. The process is reversed to return the parts of the unit 8 to its initial position, as shown in Figure 1. Each of the O-rings 27-31, once again, effect a sliding or rolling movement to minimise the friction between the parts of the unit 8. The parts of the unit 8 are thus able to move easily relative to each other to rapidly lower the rear part of the hood or bonnet. As the safety device 1 returns to its initial position the resilience of the O-rings 27-31 allows the rear part of the hood or bonnet to follow a substantially arcuate movement. An internal spring may be provided to help return the device 1 to its initial condition. A burst disc may be provided in the base plate 2 to burst when the safety device 1 is fully extended and the internal pressure rises above a threshold value. Gas may then escape allowing the safety device 1 to return to its initial condition.

Although, in this preferred embodiment the co-operating elements are formed from the upper lips 7, 14 and lower lips 15, the co-operating elements may alternatively be formed by any other movement limiter, such as chains or flexible lengths which limit the upward movement of the parts of the unit 8.

In the present Specification "comprises" means "includes or consists of" and "comprising" means "including or consisting of".

## Claims

1. A safety device (1) to move part of a vehicle comprising a fixed hollow outer sleeve (6), a source (5) to supply gas to the interior of the sleeve (6), a unit (8) initially mounted within the sleeve (6), the external diameter of the unit (8) being less than the internal diameter of the sleeve (6), the unit (8) comprising a plurality of telescoped sleeves (9,12), the fixed outer sleeve (6) and the said telescoped sleeves (9-12) being provided with movement limiters to limit movement of the sleeves (9-12), the movement limiters comprising inwardly and outwardly directed lips (14,15), provided on adjacent sleeves (6, 9-12) of the device (1), wherein an extension element (13) is telescopically mounted in the telescoped sleeve of smallest diameter (12), there being an O-ring (31) between the extension element (13) and said sleeve (12) to provide a substantial gas-tight seal, wherein the device (1) is positioned to move the rear part of a vehicle hood or bonnet and wherein the extension element (13) incorporates retaining means to engage and retain a member (20) mounted on part of the hood or bonnet wherein the retaining means comprise at least one inwardly directed resilient finger (19).

2. A safety device according to claim 1 wherein an O-ring (27) is received between the unit (8) and the sleeve (6), the O-ring engaging an external surface of the unit (8) and an internal surface (6) of the sleeve (6) to provide a substantially gas-tight seal, there being a further O-ring (28-31) between each adjacent pair of telescoped sleeves (9-12) to provide a substantially gas-tight seal.

3. A safety device according to claim 1 or claim 2, wherein the member (20) is a substantially mushroom shaped retaining member.

4. A safety device according to claim 2 or claim 3 as dependent thereon, wherein the extension element (13) has a protecting cover (21) to protect the plurality of telescoped sleeves (9-12) from oil and dirt.

5. A safety device according to claim 2 or any claim dependent thereon wherein each O-ring (28-31) is shaped and dimensioned to effect a rolling movement as the sleeves (9-12) move.

6. A safety device according to any one of the preceding claims, wherein each O-ring (28-31) is of a resilient material.

7. A safety device according to any one of the preceding claims, wherein the source is a gas generator (5).

## Patentansprüche

1. Sicherheitsvorrichtung (1) zum Bewegen eines Teils eines Fahrzeugs, umfassend eine fixierte hohle äußere Hülse (6), eine Quelle (5) zum Zuführen von Gas in das Innere der Hülse (6), eine Einheit (8), die anfänglich innerhalb der Hülse (6) montiert ist, wobei der Außendurchmesser der Einheit (8) kleiner ist als der Innendurchmesser der Hülse (6), wobei die Einheit (8) mehrere teleskopartige Hülsen (9, 12) umfasst, wobei die fixierte äußere Hülse (6) und die teleskopartigen Hülsen (9-12) mit Bewegungsbegrenzern versehen sind, um eine Bewegung der Hülsen (9-12) zu begrenzen, wobei die Bewegungsbegrenzer nach innen und nach außen gerichtete Lippen (14, 15) umfassen, die an benachbarten Hülsen (6, 9-12) der Vorrichtung (1) angeordnet sind, wobei ein Verlängerungselement (13) teleskopisch in der teleskopartigen Hülse des kleinsten Durchmessers (12) montiert ist, wobei ein O-Ring (31) zwischen dem Verlängerungselement (13) und der Hülse (12) angeordnet ist, um eine im Wesentlichen gasdichte Abdichtung herzustellen, wobei die Vorrichtung (1) dafür positioniert ist, den hinteren Teil einer Fahrzeugmotorhaube zu bewegen, und wobei das Verlängerungselement (13) ein Haltemittel enthält, um ein Element (20) in Eingriff zu nehmen und zu halten, das an einem Teil der Motorhaube montiert ist, wobei das Haltemittel mindestens einen nach innen gerichteten federnden Finger (19) umfasst.

2. Sicherheitsvorrichtung nach Anspruch 1, wobei ein O-Ring (27) zwischen der Einheit (8) und der Hülse (6) aufgenommen ist, wobei der O-Ring eine Außenfläche der Einheit (8) und eine Innenfläche (6) der Hülse (6) in Eingriff nimmt, um eine im Wesentlichen gasdichte Abdichtung herzustellen, wobei ein weiterer O-Ring (28-31) zwischen jedem benachbarten Paar teleskopartigen Hülsen (9-12) angeordnet ist, um eine im Wesentlichen gasdichte Abdichtung herzustellen.

3. Sicherheitsvorrichtung nach Anspruch 1 oder Anspruch 2, wobei das Element (20) ein im Wesentlichen pilzartig geformtes Halteelement ist.

4. Sicherheitsvorrichtung nach Anspruch 2 oder Anspruch 3, sofern von ihm abhängig, wobei das Verlängerungselement (13) eine Schutzabdeckung (21) aufweist, um die mehreren teleskopartigen Hülsen (9-12) vor Öl und Schmutz zu schützen.

5. Sicherheitsvorrichtung nach Anspruch 2 oder einem von ihm abhängigen Anspruch, wobei jeder O-Ring (28-31) so geformt oder bemessen ist, dass eine Rollbewegung erzeugt wird, wenn sich die Hülsen (9-12) bewegen.

6. Sicherheitsvorrichtung nach einem der vorangehenden Ansprüche, wobei jeder O-Ring (28-31) aus einem elastischen Material besteht.

7. Sicherheitsvorrichtung nach einem der vorangehenden Ansprüche, wobei die Quelle ein Gasgenerator ist (5).

## Revendications

1. Dispositif de sécurité (1) conçu pour déplacer une partie d'un véhicule, comprenant un manchon externe creux fixe (6), une source (5) pour alimenter en gaz l'intérieur du manchon (6), une unité (8) initialement montée dans le manchon (6), le diamètre externe de l'unité (8) étant inférieur au diamètre interne du manchon (6), l'unité (8) comprenant une pluralité de manchons télescopiques (9 à 12), le manchon externe fixe (6) et lesdits manchons télescopiques (9 à 12) étant munis de limiteurs de mouvement pour limiter le mouvement des manchons (9 à 12), les limiteurs de mouvement comprenant des lèvres orientées vers l'intérieur et vers l'extérieur (14, 15), positionnés sur des manchons adjacents (6, 9 à 12) du dispositif (1), dans lequel un élément d'extension (13) est monté de manière télescopique dans le manchon télescopique ayant le diamètre le plus petit (12), un joint torique (31) étant positionné entre l'élément d'extension (13) et ledit manchon (12) pour former un joint sensiblement étanche aux gaz, dans lequel le dispositif (1) est positionné de sorte à déplacer la partie arrière d'un capot de véhicule et dans lequel l'élément d'extension (13) intègre des moyens de retenue conçus pour venir en prise avec un élément (20) monté sur une partie du capot et retenir celui-ci, dans lequel les moyens de retenue comprennent au moins un doigt élastique orienté vers l'intérieur (19).

2. Dispositif de sécurité selon la revendication 1, dans lequel un joint torique (27) est reçu entre l'unité (8) et le manchon (6), le joint torique venant en prise avec une surface externe de l'unité (8) et une surface interne (6) du manchon (6) pour fournir un joint sensiblement étanche aux gaz, un joint torique supplémentaire (28 à 31) étant positionné entre chaque paire adjacente de manchons télescopiques (9 à 12) pour fournir un joint sensiblement étanche aux gaz.

3. Dispositif de sécurité selon la revendication 1 ou la revendication 2, dans lequel l'élément (20) est un élément de retenue sensiblement en forme de champignon.

4. Dispositif de sécurité selon la revendication 2 ou la revendication 3 en ce qu'elle dépend de celle-ci, dans lequel l'élément d'extension (13) a un couvercle de protection (21) pour protéger la pluralité de manchons télescopiques (9 à 12) de l'huile et de la saleté.

5. Dispositif de sécurité selon la revendication 2 ou toute revendication dépendant de celle-ci, dans lequel chaque joint torique (28 à 31) est façonné et dimensionné de sorte à effectuer un mouvement roulant à mesure que les manchons (9 à 12) se déplacent.

6. Dispositif de sécurité selon l'une quelconque des revendications précédentes, dans lequel chaque joint torique (28 à 31) est fait d'un matériau résilient.

7. Dispositif de sécurité selon l'une quelconque des revendications précédentes, dans lequel la source est un générateur de gaz (5).
